# EUROPEAN PATENT APPLICATION

(11) **EP 1 837 650 A1**
(43) Date of publication of application: **26.09.2007**
(21) Application number: 06111725.5
(22) Date of filing: 24.03.2006
(51) Int. Cl.: G01N 30/30

(54) **Thermally conductive sheath for fluid conduit**

(71) Applicant: Agilent Technologies, Inc., Santa Clara, CA 95051 (US)
(72) Inventor: Konstantin, Choikhet, 76228, Karlsruhe (DE)
(74) Representative: Barth, Daniel Mathias

(57) **Abstract**

A thermo apparatus comprising a thermally conductive sheath (2) is described. The thermally conductive sheath is adapted to be thermally coupled with a thermo unit (4) adapted to be kept at a predefined temperature. The sheath is further adapted to at least partly surround a fluid conduit (1) adapted for conducting a fluid.

## Description

### BACKGROUND ART

The present invention relates to a thermo apparatus, to a separation system comprising a separation column, and to a method for supplying a fluid at a predefined temperature.

European Patent Application EP 0716302 describes a method for thermally stabilizing two columns for liquid chromatography. The method comprises the following steps: operating the first column at a first temperature which is different from the operating temperature of the second column, and transferring the sample contained in the first column to the second column by operation of switching means arranged between the two columns. In an embodiment of the invention, the first column is a pre-column and the pre-column is operated, during an enrichment phase, at a first temperature lower than an operating temperature of the separation column. After completion of the enrichment phase, the sample contained in the pre-column is heated to a second temperature higher than the operating temperature of the separation column, then the sample contained in the pre-column is transferred to the separation column and then the sample is cooled to the operating temperature of the separation column.

US Patent 5,238,557 relates to an apparatus for controlling the temperature of a mobile phase in a fluid chromatographic system. The apparatus comprises both an ingoing capillary connected to an inlet of a column and an outgoing capillary connected an outlet of the column. A portion of the ingoing capillary and a portion of the outgoing capillary are arranged in thermal contact with each other to form a contact region wherein heat exchange can occur. In preferred embodiments, liquid leaving the column at an elevated temperature loses a portion of its heat, thus avoiding or at least substantially reducing the transfer of heat to the detector. At the same time, liquid flowing to the column is pre-heated by the liquid leaving the column so that the heating power required for bringing the mobile phase to the desired temperature is reduced as compared with prior art devices.

It is an object of the invention to provide a fluid conduit with improved thermal properties. The object is solved by the independent claim(s). Further embodiments are shown by the dependent claim(s).

A thermo apparatus according to embodiments of the present invention comprises a thermally conductive sheath adapted to be thermally coupled with a thermo unit, wherein the thermo unit is adapted to be kept at a predefined temperature. The sheath is further adapted to at least partly surround a fluid conduit adapted for conducting a fluid.

Miniaturization of fluid systems, in particular miniaturization of fluid analysis systems, gives rise to a corresponding reduction of the flow rates and of the volumes of fluid. Especially in case of small volumes of fluid being conveyed through a fluid conduit at a small flow rate, heat exchange between the fluid and the fluid conduit will lead to significant temperature variations of the fluid passing through a fluid conduit.

In prior art solutions, it has been tried to reduce the heat exchange between the fluid and the fluid conduit by enclosing the fluid conduit with an insulating layer. However, even in case the fluid conduit is equipped with an insulating layer, there still is a heat exchange between the fluid and the walls of the fluid conduit, and especially in case of low flow, the fluid is subjected to temperature fluctuations.

According to embodiments of the present invention, the fluid conduit is equipped with a thermally conductive envelope, and the thermally conductive envelope is kept at a predefined temperature. Thus, it is possible to control the temperature of the fluid conduit's surrounding. The sheath is kept at a predefined temperature, and the walls of the fluid conduit are also kept at this temperature. For example, in case the fluid passing through the fluid conduit has been brought to this temperature as well, there won't be any heat exchange between the fluid and the fluid conduit.

Hence, by actively controlling the ambient temperature of the fluid conduit, it is possible to control the heat exchange between the fluid and the fluid conduit. Temperature variations of the fluid passing through the fluid conduit are minimized. In fact, controlling the ambient temperature by keeping a thermally conductive sheath at a predefined temperature is much more efficient than any kind of insulation.

In a preferred embodiment, the thermo apparatus further comprises a thermo unit. Preferably, the thermo unit is thermally coupled with the sheathing of the fluid conduit. When the thermo unit is kept at a predefined temperature, the sheathing will substantially be kept at this temperature as well. Thus, it is possible to stabilize the ambient temperature of the fluid conduit, in order to provide for reliable operating conditions.

According to a preferred embodiment, the thermo unit is a heating unit. Using a heating unit allows to heat the thermally conductive sheath to a predefined temperature. According to an alternative embodiment, the thermo unit is a heat reservoir. By thermally coupling the sheathing with a heat reservoir, a constant temperature of the sheathing can be accomplished as well. Preferably, the heat capacitance of the heat reservoir is sufficiently large.

According to a preferred embodiment, the thermo apparatus is employed in a fluid analysis system. In a further preferred embodiment, the thermo apparatus is adapted for supplying fluid to a separation column. The results obtained in a separation system strongly depend on the respective temperatures of the fluid and of the stationary phase. Embodiments of the present invention help to stabilize the operating conditions of a separation system. In particular, the temperature of a fluid supplied to the separation system is kept as constant as possible.

In a preferred embodiment, the fluid conduit is a capillary. Further preferably, the capillary is made of steel. A steel capillary is well suited for being tempered by a sheath enclosing the capillary. In a preferred embodiment, the capillary's inner diameter lies in the range between 0.1 mm and 0.4 mm.

In a preferred embodiment, the fluid conduit is at least partly surrounded by a rigid sheath. In an alternatively preferred embodiment, a flexible sheath is employed. A flexible sheath may adapt to the respective shape of the fluid conduit.

According to a further preferred embodiment, the sheath is made of braided wire, e.g. of copper wire or aluminium wire. In an alternatively preferred embodiment, the sheath is made of a foil. Preferably, the sheath is made of a metal like e.g. copper or aluminium, which is characterized by high thermal conductivity.

In a further preferred embodiment, the thermo apparatus further comprises a thermally insulating layer that encloses the fluid conduit, with the thermally conductive sheath encompassing both the fluid conduit and the insulating layer. The insulating layer helps to further reduce any heat exchange between the fluid and the fluid conduit.

In yet another preferred embodiment, the thermo apparatus further comprises a thermally insulating outer layer that encloses both the fluid conduit and the thermally conductive sheath. Heat exchange between the thermally conductive sheath and its surrounding is reduced. Thus, the thermally insulating outer layer stabilizes the temperature of the thermally conductive sheath.

A separation system according to embodiments of the present invention comprises a heat exchanger adapted for preheating a fluid; a separation column adapted for separating compounds of a fluid sample; a fluid conduit adapted for fluidically coupling the heat exchanger's outlet with the separation column's inlet. The separation system further comprises a thermo apparatus as described above, with the thermally conductive sheath adapted to at least partly surround the fluid conduit.

The reliability of measurement results acquired in a separation system depend on stable operating conditions. Measurement results strongly depend on the temperature of the fluid supplied to the separation column and on the temperature of the separation column's stationary phase. Therefore, temperature fluctuations of the fluid supplied to the separation column tend to affect the measurement results. In this regard, a fluid conduit that couples the heat exchanger's outlet with the inlet of the separation column can be quite critical, because due to heat dissipation, the fluid's temperature might experience a change.

According to embodiments of the present invention, the fluid conduit is at least partly surrounded by a thermally conductive sheath, the sheath being thermally coupled with a thermo unit. By providing a sheath that is kept at a predefined temperature, it is possible to control the ambient temperature of the fluid conduit. This allows for a more precise control of the temperature of a fluid supplied to the separation column. For the separation system, stable operating conditions can be assured.

In a preferred embodiment, the thermally conductive sheath is thermally coupled with the heat exchanger. In this embodiment, the heat exchanger is responsible both for preheating the fluid supplied to the separation column and for keeping the thermally conductive sheath at a predefined temperature. For this reason, the temperature of the fluid is approximately equal to the temperature of the fluid conduit, and accordingly, the fluid will not be subjected to temperature changes while passing through the fluid conduit.

In a preferred embodiment, the separation system further comprises a thermostatted column compartment adapted for keeping the separation column at a predefined temperature. In a further preferred embodiment, the thermally conductive sheath is thermally coupled with the thermostatted column compartment. In this embodiment, the sheath, the column compartment and the separation column are substantially kept at the same temperature.

According to another preferred embodiment, the heat exchanger and the thermostatted column compartment are implemented as an integrated thermostatted heating block. The heating block comprises the heat exchanger adapted for preheating the fluid before the fluid is supplied to the separation column. The heating block further comprises the column compartment, which is adapted for keeping the separation column at a predefined temperature. The integrated heating block is responsible for preheating the fluid, the sheath and the separation column. As a consequence, the fluid, the sheath and the separation column are substantially kept at a predefined temperature, and well-defined operating conditions are provided.

According to a preferred embodiment, the separation system is one of: a liquid chromatography system, an electrophoresis system, an electrochromatography system.

A method for supplying a fluid at a predefined temperature according to embodiments of the present invention comprises: thermally coupling a thermally conductive sheath to a thermo unit; keeping the thermo unit at a predefined temperature; and at least partly surrounding a fluid conduit with the sheath, the fluid conduit being adapted for conducting a fluid.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied for controlling the temperature of the thermally conductive sheath.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s).

Fig. 1 shows a fluid conduit surrounded by a thermally conductive sheath;

Fig. 2 depicts four different cross sections of a fluid conduit surrounded by a thermally conductive sheath;

Fig. 3 shows a set-up of a separation system;

Fig. 4 illustrates two embodiments of a thermally conductive sheath;

Fig. 5 shows a heating block for use in a separation system.

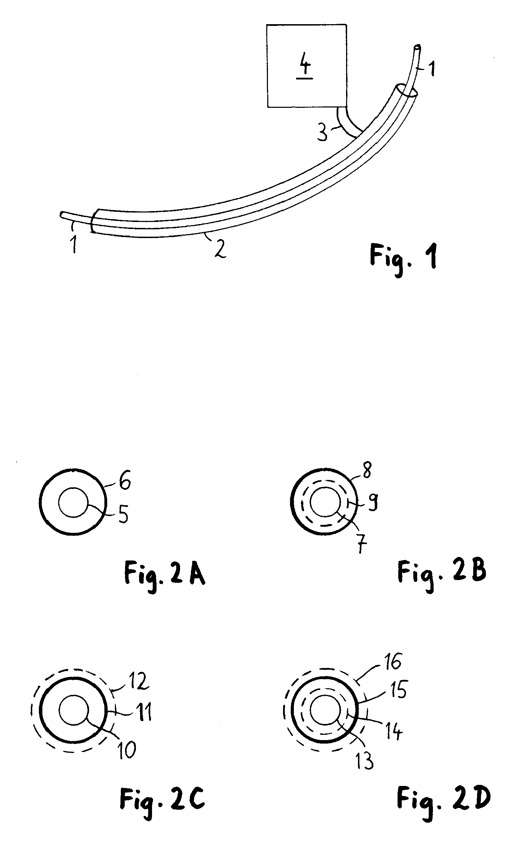

Fig. 1 shows a fluid conduit 1 surrounded by a thermally conductive sheath 2 according to an embodiment of the present invention. Via a coupling member 3, the thermally conductive sheath 2 is thermally coupled with a thermo unit 4. The thermo unit 4 might e.g. be a heating unit or a heat reservoir that is kept at a predefined temperature. Thus, the thermally conductive sheath 2 is kept as this temperature as well.

When fluid of a certain temperature is conveyed through a fluid conduit 1 at a rather small flow rate, there will be a heat exchange between the fluid and the walls of the fluid conduit 1, and as a consequence, the fluid's temperature will be modified. Even if an insulating layer is wrapped around the fluid conduit 1, this insulating layer will not prevent the fluid from cooling down during its passage through the fluid conduit 1. By providing a thermally conductive sheath 2 that is kept at a predefined temperature, an effective temperature stabilization of the fluid passing through the fluid conduit 1 can be accomplished. Thus, a temperature change of the fluid passing through the fluid conduit 1 is minimized.

The fluid conduit 1 might e.g. be a metal capillary with an inner diameter in the range between 0.1 mm and 0.4 mm. The thermally conductive sheath 2 might e.g. be implemented as a rigid tubing. The sheath might e.g. be made of metal, preferably of a metal of high thermal conductivity like e.g. copper or aluminium. Alternatively, the thermally conductive sheath might e.g. be made of a metal foil. Further alternatively, the thermally conductive sheath 2 may be realized as a flexible envelope. For example, the thermally conductive sheath 2 may be made of braided wire, e.g. of copper wire or aluminium wire. The coupling member 3 may also be made of copper or aluminium.

Fig. 2A to 2D depict four different embodiments of a capillary that is surrounded by a thermally conductive sheathing. In Fig. 2A, a fluid conduit 5 is surrounded by a thermally conductive envelope 6 that is kept at a certain temperature.

Fig. 2B shows a cross section of a fluid conduit 7 and a thermally conductive sheath 8, with an additional insulating layer 9 being located between the fluid conduit 7 and the sheath 8. By introducing an additional insulating layer 9, the heat exchange between a fluid passing through the fluid conduit 7 and the surrounding is further reduced.

Fig. 2C shows a cross section of a fluid conduit 10 surrounded by a thermally conductive sheath 11. The setup further comprises an insulating layer 12 enclosing both the fluid conduit 10 and the sheath 11. Due to the presence of the insulation layer 12, any heat exchange between the sheath 11 and its surrounding is reduced, and thus, the temperature of the sheath 11 is further stabilized.

Fig. 2D shows a fluid conduit 13 surrounded by a first insulating layer 14 and a thermally conductive sheath 15. Furthermore, the sheath 15 is enclosed by a second insulating layer 16.

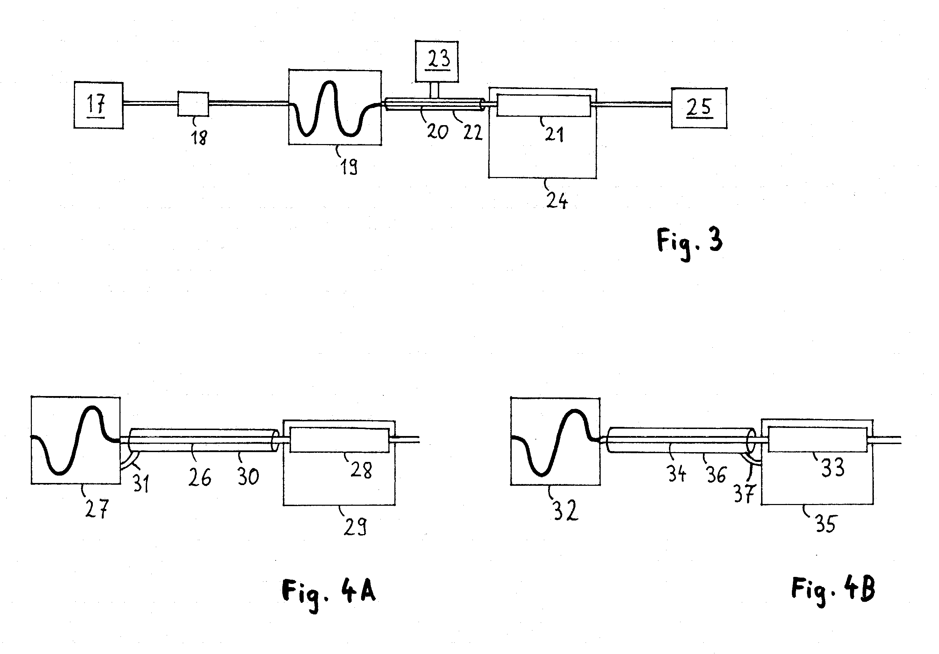

A fluid conduit of the type described in Figs. 1 and 2 might e.g. be employed in a separation system adapted for separating and analyzing compounds of a fluid sample. Fig. 3 illustrates a setup of a separation system. The separation system comprises a pump 17 adapted for supplying a flow of eluent. At a sample injection unit 18, a volume of fluid sample may be injected into the eluent. Then, the fluid is conveyed through a heating flow path of a heat exchanger 19, in order to bring both the mobile phase and the fluid sample to a predefined temperature. Via a fluid conduit 20, the heat exchanger's outlet is coupled with the inlet of a separation column 21.

According to embodiments of the present invention, the fluid conduit 20 is at least partly surrounded by a thermally conductive sheath 22, which is kept at a predefined temperature. Thus, it is made sure that the fluid passing through the fluid conduit 20 is prevented from cooling down before reaching the separation column 21. For keeping the thermally conductive sheath 22 at a predefined temperature, the sheath 22 might e.g. be thermally coupled with a thermo unit 23.

The separation system further comprises a thermostatted column compartment adapted for keeping the separation column 21 at a predefined temperature. The outlet of the separation column 21 is fluidically coupled with a detection unit 25. During their passage through the separation column 21, the sample's various compounds become separated, and the separated compounds can be detected in the detection unit 25.

The set-up depicted in Fig. 3 relates to a liquid chromatography system. However, a fluid conduit with a thermally conductive sheath might as well be used in any other type of fluid system, e.g. in an electrophoresis system, or in an electrochromatography system.

The separation system shown in Fig. 3 comprises a dedicated thermo unit 23 adapted for keeping the thermally conductive sheath at a predefined temperature. Instead of thermally coupling the sheath with a dedicated thermo unit, the sheath might as well be thermally coupled with the heat exchanger 19. Alternatively, the sheath might be thermally coupled with the thermostatted column compartment 24, of with both the heat exchanger 19 and the thermostatted column compartment 24.

Embodiments of this type are shown in Figs. 4A and 4B. In Fig. 4A, a fluid conduit 26 provides a fluid connection between a heat exchanger 27 and a separation column 28, the separation column 28 being contained in a thermostatted column compartment 29. The fluid conduit 26 is enclosed by a thermally conductive sheath 30 which is thermally coupled with the heat exchanger 27 via a thermal connection 31. In this embodiment, the sheath 30 is approximately kept at the temperature of the heat exchanger 27.

Fig. 4B shows an alternative embodiment of the present invention. Again, the outlet of a heat exchanger 32 is fluidically coupled with an inlet of a separation column 33 via a fluid conduit 34. The separation column 33 is located in a thermostatted column compartment 35, which is kept at a predefined temperature. The fluid conduit 33 is at least partly surrounded by a thermally conductive sheath 36. The thermally conductive sheath 36 is thermally connected (37) with the thermostatted column compartment 35, and hence, the sheath 36 is approximately kept at the temperature of the thermostatted column compartment 35.

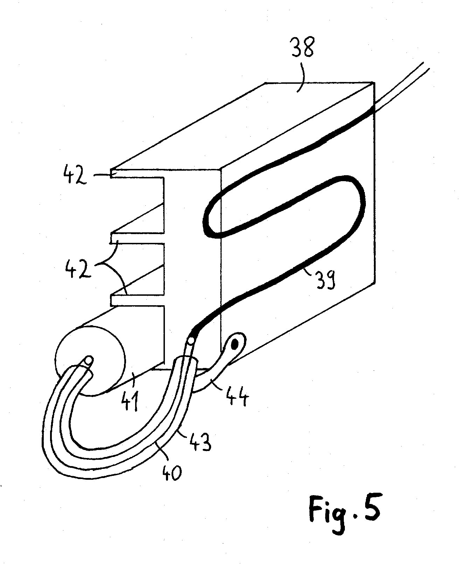

Fig. 5 shows an embodiment of a separation system, wherein the heat exchanger and the column compartment are implemented as one heating block. The thermostatted heating block 38 in Fig. 5 is constantly kept at a predefined temperature. The thermostatted heating block 38 comprises a heating flow path 39 adapted for pre-heating both eluent and sample. A capillary 40 provides a fluid connection between the outlet of the heating flow path 39 and the inlet of a separation column 41. The thermostatted heating block 38 further comprises a plurality of fins 42, with the separation column 41 being placed between two adjacent fins. The thermostatted heating block 38 acts both as a heat exchanger for pre-heating a fluid and as a thermostatted column compartment for keeping the separation column at a predefined temperature.

According to embodiments of the present invention, the capillary 40 is at least partly surrounded by a sheath 43, which might e.g. be made of braided wire. The sheath 43 is thermally coupled to the thermostatted heating block 38 via a thermal connection 44. Thus, the temperature of the thermally conductive sheath 43 is kept at the temperature of the thermostatted heating block 38. Fluid that has been passed through the heating flow path 39 is not subjected to a temperature drop before being supplied to the separation column 41.

## Claims

1. A thermo apparatus comprising
a thermally conductive sheath adapted to be thermally coupled with a thermo unit adapted to be kept at a predefined temperature, wherein the sheath is further adapted to at least partly surround a fluid conduit adapted for conducting a fluid.

2. The thermo apparatus of claim 1, comprising at least one of the features:
the thermo apparatus further comprises the thermo unit adapted to be kept at the predefined temperature;
the thermo apparatus further comprises the fluid conduit adapted for conducting the fluid;
the thermo unit is one of a group comprising a heating unit, a cooling unit and a heat reservoir;
the thermo unit is adapted for at least one of heating and cooling;
the thermally conductive sheath is adapted for keeping the fluid passing through the fluid conduit at the predefined temperature;
the thermo apparatus is adapted for supplying fluid at the predefined temperature to a separation column.

3. The thermo apparatus of claim 1 or any one of the above claims, wherein the fluid conduit is implemented as a capillary.

4. The thermo apparatus of claim 3, further comprising at least one of the following features:
the capillary is made of steel;
the capillary's inner diameter ranges from 0.1 mm to 0.4 mm.

5. The thermo apparatus of claim 1 or any one of the above claims, further comprising at least one of the following features:
the thermally conductive sheath is at least one of a group comprising: a rigid sheath, a flexible sheath, a braided wire;
the thermally conductive sheath is made of at least one of a group comprising: a foil, metal, preferably copper or aluminium, copper wire or aluminium wire.

6. The thermo apparatus of claim 1 or any one of the above claims, further comprising at least one of the features:
a thermally insulating layer located between the fluid conduit and the thermally conductive sheath;
a thermally insulating outer layer enclosing both the fluid conduit and the thermally conductive sheath.

7. A separation system comprising
a heat exchanger adapted for preheating a fluid;
a separation column adapted for separating compounds of a fluid sample;
a fluid conduit adapted for fluidically coupling the heat exchanger's outlet with the separation column's inlet;
a thermo apparatus according to claim 1 or any one of the above claims, with the thermally conductive sheath adapted to at least partly surround the fluid conduit.

8. The separation system of claim 7, wherein the heat exchanger acts as the thermo unit, with the thermally conductive sheath being thermally coupled with the heat exchanger.

9. The separation system of claim 7 or any one of the above claims, further comprising a thermostatted column compartment adapted for keeping the separation column at a predefined temperature, preferably wherein the thermally conductive sheath is thermally coupled with the thermostatted column compartment.

10. The separation system of claim 7 or any one of the above claims, comprising at least one of:
the heat exchanger comprises a heat exchange flow path for preheating the fluid;
the heat exchanger and the thermostatted column compartment are implemented as one thermostatted heating block;
the separation system is one of: a liquid chromatography system, an electrophoresis system, an electrochromatography system.

11. A method for supplying a fluid at a predefined temperature, the method comprising
thermally coupling a thermally conductive sheath to a thermo unit;
keeping the thermo unit at a predefined temperature;
at least partly surrounding a fluid conduit, adapted for conducting a fluid, with the sheath.

12. The method of claim 11, further comprising at least one of:
heating up a thermally conductive sheath surrounding a fluid conduit to a predefined temperature;
conveying a fluid through the fluid conduit;
preheating the fluid conveyed through the fluid conduit using a heating unit;
supplying the fluid conveyed through the fluid conduit to a separation system.
